# EUROPÄISCHE PATENTANMELDUNG

(11) **EP 3 598 383 A1**
(43) Veröffentlichungstag der Anmeldung: **22.01.2020**
(21) Anmeldenummer: 18184324.4
(22) Anmeldetag: 18.07.2018
(51) Int. Cl.: G06Q 50/28

(54) **SYSTEM ZUR GESICHERTEN AUSGABE VON OBJEKTEN**

(71) Anmelder: Siemens Aktiengesellschaft, 80333 München (DE)
(72) Erfinder: Schwinge, Christian, 90556 Cadolzberg (DE)

(57) **Zusammenfassung**

Die vorliegende Erfindung ist insbesondere anwendbar im Bereich der Flughafenlogistik. Anstelle einer technisch ungesicherten Gepäckausgabe über die «reclaim belts» wird ein System zur gesicherten Ausgabe von Gepäckstücken (10) verschiedener Dimensionen aus verschließbaren Ausgabefächern (21, 21') vorgeschlagen. Die Gepäckstücke (10) werden automatisiert in der Größe der Gepäckstücke entsprechender Ausgabefächer (21, 21') platziert zur besseren Ausnutzung des verfügbaren Platzes.

Nur mit einer der einem Gepäckstück zugeordneten Identität wie zB Flugschein, Reisepass kann das Gepäckstück (10) mittels eines an einer Außentüre (23) des Ausgabefachs (21, 21') befindlichen Scanners (24) entnommen werden. Dadurch wird eine sichere und rückverfolgbare Übergabe von Gepäckstücken (10) an die Passagiere ermöglicht.

## Beschreibung

Die vorliegende Erfindung bezieht sich auf ein System zur gesicherten Ausgabe von Objekten, insbesondere zur gesicherten Ausgabe von Gepäckstücken an Flughäfen, gemäß dem Patentanspruch 1.

Die vorliegende Erfindung betrifft insbesondere das technische Gebiet der Airport-Logistik. An einem Ankunftsflughafen ankommende Passagiere entnehmen ihr am Abflughafen aufgegebenes Gepäck von einem Flughafen-Gepäckausgabekarussell, das meist mit «reclaim carussel» bezeichnet wird. Einem solchen Gepäckausgabekarussell wird in der Regel über Zuführbänder das Gepäck ober- oder unterhalb auf Förderbändern zugeführt und dann auf ein umlaufendes Förderband verteilt, dieses Förderband wird meist mit «reclaim belt» bezeichnet. Die Passagiere erkennen ihre Gepäckstücke und entnehmen diese von diesem Gepäckausgabekarussell. Die Entnahme der Gepäckstücke durch die Passagiere erfolgt auf einer Vertrauensbasis der sogenannt sozialen Kontrolle. Eine Entnahme durch eine andere Person, sei es wegen einer Verwechslung oder absichtlich ist nicht ausgeschlossen.

Verluste des Handgepäcks - insbesondere wenn nicht klar ist, ob das betreffende Gepäckstück verloren ging oder bei der Gepäckausgabe irrtümlicherweise oder absichtlich von einer nicht berechtigten Person entnommen wurde - sind nicht nur ärgerlich, sondern mit erheblichem Aufwand für Flughafenbetreiber, Airline und Passagier verbunden.

Zur gesicherten Ausgabe von Objekten sind Lösungen von Postdienstleistern bekannt. Kann wegen Abwesenheit eines Empfängers eine eingeschriebene Sendung nicht zugestellt werden, wird der betreffende Empfänger zB durch eine E-Mail informiert, dass er an einer Automatischen Ausgabestelle gegen Eingabe eines Codes die entsprechende Sendung in Empfang nehmen kann. Solche Ausgabestellen werden mit einer Zeitverzögerung von mindestens einem Tag manuell befüllt. Solche Lösungen sind für die gesicherte Ausgabe von Fluggepäck nicht anwendbar.

Der vorliegenden Erfindung liegt daher die Aufgabe zugrunde, ein System zur Ausgabe von Objekten, insbesondere von Fluggepäck anzugeben, dass leicht in eine bestehende Flughafeninfrastruktur integriert werden kann, eine Entnahme nur durch eine berechtigte Person erlaubt und benutzerfreundlich bedient werden kann.

Diese Aufgabe wird durch die im Patentanspruch 1 angegebenen Merkmale gelöst. Vorteilhafte Ausgestaltungen der Erfindung sind in weiteren Ansprüchen angegeben.

Das erfindungsgemäße System zur gesicherten Ausgabe von Objekten verschiedener Dimensionen aus verschließbaren Ausgabefächern weist folgende Merkmale auf:
Die verschließbaren Ausgabefächer sind in einer Ausgabestelle angeordnet, wobei jedem auszugebendem Objekt eine eindeutige maschinenlesbare Identität zugeordnet ist und die Objekte auf einem Fördermittel der Ausgabestelle zugeführt werden;
es sind Mittel zur Erfassung der Dimension der zugeführten Objekte vorgesehen und die erfasste Dimension wird zusammen mit der Identität der Objekte in einem Informationssystem gespeichert;
es ist ein Ausrichtemodul zur Ausrichtung der Objekte und ein Rotationsförderer zur Aufrichtung der Objekte vorhanden;
es sind Mittel zur Verteilung und Platzierung der aus- und aufgerichteten Objekte in Ausgabefächer verschiedener Größe vorgesehen, wobei die Verteilung eines jeden Objektes in ein Ausgabefach abhängig von der erfassten Dimension dieses Objektes ist; und
zum Ausgabefach ist ein Verschlussmittel vorgesehen, damit das Ausgabefach mit einer aus der Identität des Objektes abgeleiteten Identität geöffnet werden kann.

Die Erfindung wird vorzugsweise auf Flughäfen für die Ausgabe von Gepäckstücken eingesetzt, dabei ist der Begriff «Gepäckstück» eine besondere Ausprägung des allgemeineren Begriffs «Objekt». Die Erfindung kann auch in Kreuzfahrtterminals angewendet werden, wo eine sehr große Anzahl (zB > 1000) ankommender Passagiere ihre Gepäckstücke ebenfalls auf eine effiziente und gesicherte Weise für einen Aufenthalt entgegen nehmen.

Eine Integration des erfindungsgemäßen Systems auf einem Flughafen ist relativ einfach möglich, da auf einem Flughafen ohnehin neben den Airlines mindestens ein IT-Provider tätig ist. Der IT-Provider stellt mit seinen IT-Informationssystemen die Daten für die verschiedenen Organisationen bereit. Insbesondere verfügt der IT-Provider über die Passagierdaten einschließlich der zugehörigen Identitäten für das Reisegepäck der ankommenden Passagiere. Zusammen mit den erfindungsgemäß erfassten Daten zur Dimension der Gepäckstücke ist eine Echtzeit-Verarbeitung dieser Daten für die Zuordnung der Gepäckstücke zu Ausgabefächern der entsprechenden Ausgabestelle bereitzustellen und in das erfindungsgemäße System einzuspeisen.

Die aus der Identität des Objektes abgeleitete Identität kann im Fall von Reisegepäck wie folgt ausgebildet sein:
- physischer Transportschein, ggf. mit QR-Code, physisch im Sinne des Datenträger Papier;
- auf einem Smartphone gespeichertes Flugschein/Transportschein, ggf. ebenfalls mit QR-Code;
- Reisepass,
- Identitätskarte,
- Gepäckaufgabebeleg, meistens auf dem Boardingpass aufgeklebt.

Vorteilhafte Ausführungsformen der vorliegenden Erfindung sind in abhängigen Ansprüchen angegeben.

So können sich die folgenden Vorteile zusätzlich ergeben:
i) Die Ausgabestelle kann als mehrstöckiger Zylinder oder als mehrstöckiger Quader ausgebildet sein und somit bestehende «reclaim belts» - seien es kreisförmige «reclaim belts» oder seien es antiparallel umlaufende «claim belts» - ersetzen. Hinsichtlich baulicher Maßnahmen oder hinsichtlich Platzbedarf sind keine relevanten Anpassungen erforderlich.
   Da Ausgabefächer der Ausgabestelle mehrstöckig angeordnet (Anspruch 11) werden können, zB "zweistöckig" bis "vierstöckig", ergibt sich eine signifikant höhere Flächenpackungsdichte gegenüber dem «claim belt».
ii) Durch eine gesicherte Ausgabe von Objekten/Gepäck reduziert sich bei allen Beteiligten der Aufwand für nicht übergebene oder gestohlene Gepäckstücke. Zusätzlich kann mittels des IT-Informationssystems die Ausgabe eines jeden Gepäckstücks erfasst werden und dies erlaubt somit auch eine Rückverfolgbarkeit der Übergabe des betreffenden Gepäckstückes.
iii) Durch die systematische Bereitstellung der Information über das zu benutzende Ausgabefach (Anspruch 7) steht für die Passagiere die Wartezeit für andere Zwecke zur Verfügung und beinhaltet somit kein nervenaufreibendes Warten vor einem «claim belt».
iv) Die gesicherte Ausgabe der Objekte/Gepäckstücke an den festgelegten Ausgabefächern verhindert Tumulte an der Ausgabestelle, da ein Drängeln sinnlos ist.

Die Erfindung wird nachfolgend anhand der Zeichnung beispielsweise näher erläutert. Dabei zeigen:
- Figur 1: Ausrichtung von Gepäckstücken und Zuführung in eine Ausgabestelle;
- Figur 2a: Partielle Schnittdarstellung einer zylinderförmigen Ausgabestelle;
- Figur 2b: Ansicht einer zylinderförmigen Ausgabestelle, wie sie sich einem Flugpassagier präsentiert;
- Figur 3a: Ausgabefachmodul für eine zylindrisch ausgestaltete Ausgabestelle;
- Figur 3b: Ausgabefachmodul für eine als Quader ausgestaltete Ausgabestelle.

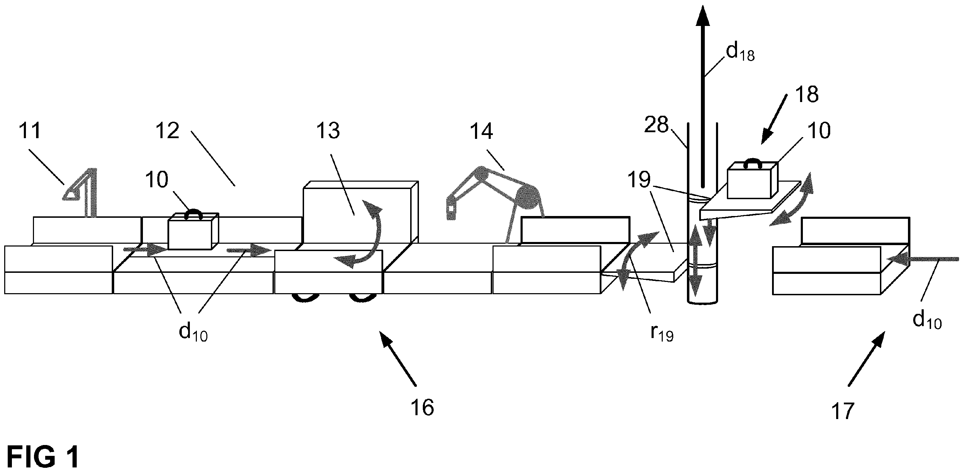

FIG 1 zeigt für einen ersten Prozessschritt die Ausrichtung von Gepäckstücken 10 und deren Zuführung zu einer Ausgabestelle 20. Die auf einem Förderband in Richtung d₁₀ ankommenden Gepäckstücke 10 müssen einer Lageerkennung 11 einschließlich einer 3D-Erfassung ihrer Dimension unterzogen werden. Jedes Gepäckstück ist mit einer Gepäckidentität ID₁₀ versehen, zB mit einer einen Barcode aufweisenden Etikette oder einem RFID-Tag. Meist ist diese Gepäckidentität ID₁₀ aus Redundanzgründen doppelt auf dem Gepäckstück 10 angebracht oder auf zwei verschiedenen Medien wie zB vorgenannt Etikette und RFID-Tag. Die Dimension/Größe eines durch die Lageerkennung 11 erfassten Gepäckstückes 10 wird zusammen mit der Gepäckidentität ID₁₀ in einem Informationssystem eines IT-Providers (nicht dargestellt in den Figuren) gespeichert. Im nächsten Prozessschritt werden die Gepäckstücke 10 durch ein Ausrichtemodul 12 "geordnet" ausgerichtet. Anschließend erfolgt eine Aufrichtung der Gepäckstücke 10 durch einen Rotationsförderer 13. Im Falle von Koffern heißt dies, dass die Koffer in eine vertikale Lage mit dem Koffergriff nach oben gebracht werden. Die Erkennung des Koffergriffes erfolgt durch die 3D-Erfassung. Damit ist die definitive räumliche Ausrichtung der Gepäckstücke festgelegt. Dies ist wichtig für die später erfolgende Entnahme der Koffer/Gepäckstücke aus einem Ausgabefach. Mit dieser festgelegten Ausrichtung in aufgerichteter Position werden die Gepäckstücke 10 auf einen Ladungsträger 19 in Förderrichtung d₁₀ verschoben.

Optional können vorher durch einen Roboterarm 14 additive Label wie Werbung, Zielort Informationen, etc. am Gepäckstück angebracht werden.

Die vorstehende Beschreibung bezieht sich auf eine erste Beschickungslinie 16. Es kann je nach Disposition des Flughafens auch eine zweite Beschickungslinie 17 vorgesehen sein, diese zweite Beschickungslinie 17 ist identisch ausgebildet wie die erste Beschickungslinie 16. In FIG 1 ist diese zweite Beschickungslinie 17 lediglich symbolisch dargestellt.

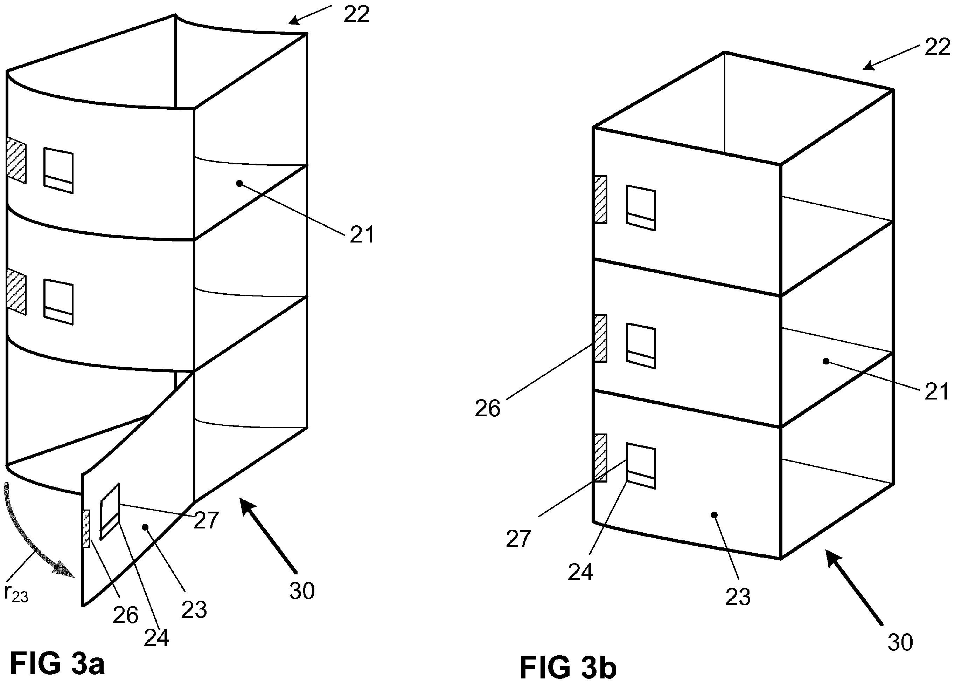

Ein Lift 18 transportiert das auf dem Ladungsträger 19 befindliche Gepäckstück 10 vertikal in das Innere einer zylindrisch ausgestalteten Ausgabestelle 20, die aus mehreren Ausgabefachmodulen 30 gebildet ist. Je nach Konfiguration können mehrere gleichzeitig agierende Ladungsträger 19 an der Liftsäule 28 des Liftes 18 befestigt sein. Zur Ausgestaltung der Ausgabefachmodule 30 wird nachfolgend auf FIG 3a Bezug genommen. Durch gleichzeitiges horizontales Rotieren des Ladungsträgers 19 in Transportrichtung d₁₈ wird ein aufgrund von Passagier- und Gepäckdaten - insbesondere die bei der Lageerkennung registrierte Größe - vom Steuerungssystem definiertes Ausgabefach 21 angefahren. Dies erfolgt durch gleichzeitiges horizontales Rotieren r₁₉ des Ladungsträgers 19 um die Liftachse 28. Zur Übergabe des Gepäckstückes 10 teleskopiert der Ladungsträger 19 von innen in das Ausgabefach 21, 21'. Bei der Rückbewegung des Ladungsträgers 19 läuft ein auf dem Ladungsträger 19 vorhandenes Förderband (nicht dargestellt in den Figuren) gegenläufig, um das Gepäckstück 10 in das Ausgabefach 21 definitiv abzulegen. Nach der Übergabe wird die Rückwand bzw. die Innentüre 22 des betreffenden Ausgabefaches 21 gegen Einfallen des Gepäckstückes 10 oder gegen Sabotage geschlossen.

FIG 3a zeigt ein Ausgabefachmodul 30. Dabei sind mehrere Ausgabefächer 21, 21' übereinander angeordnet. Die Anzahl der Stockwerke ergibt sich aus der Höhe eines Ausgabefaches 21 und der Beschränkung, dass das oberste Ausgabefach 21 noch gut von einer durchschnittlich langen Person entnommen werden kann. Als Beispiel sei eine Netto-Höhe eines Ausgabefaches von 50cm angenommen. Diese Netto-Höhe würde noch eine vierstöckige Ausführung des Ausgabefachmoduls erlauben. Bei verschieden hohen Ausgabefächern 21, 21' ergeben sich ähnliche Werte bei zB einer dreistöckigen Ausführung:
Unterste Ausgabefachhöhe 80cm,
Mittlere Ausgabefachhöhe 65cm,
Oberste Ausgabefachhöhe 50cm.
Eine Mehrzahl solcher Ausgabemodule 30 bildet die vorgenannte zylinderförmige Ausgabestelle 20. Jedes Ausgabefach 21 weist - wie bereits erwähnt - eine verschließbare Innentüre 22 auf. Für die gesicherte Entnahme des Gepäckstückes 10 durch den Passagier ist eine Außentüre 23 vorgesehen. Diese Außentüre 23 weist eine Entriegelungseinheit resp. einen Scanner sowie ein für diese Außentüre 23 spezifisches Display 27 auf. Die Außentüre 23 ist wie üblich um eine Achse in der Richtung r₂₃ drehbar. Ebenfalls kann noch ein Handgriff 26 an der Außentüre 23 vorgesehen sein. Jede Außentüre 23 kann mit einer Nummer versehen sein, entweder physisch angebracht ist und/oder mit einem Display 27 festgelegt werden kann.

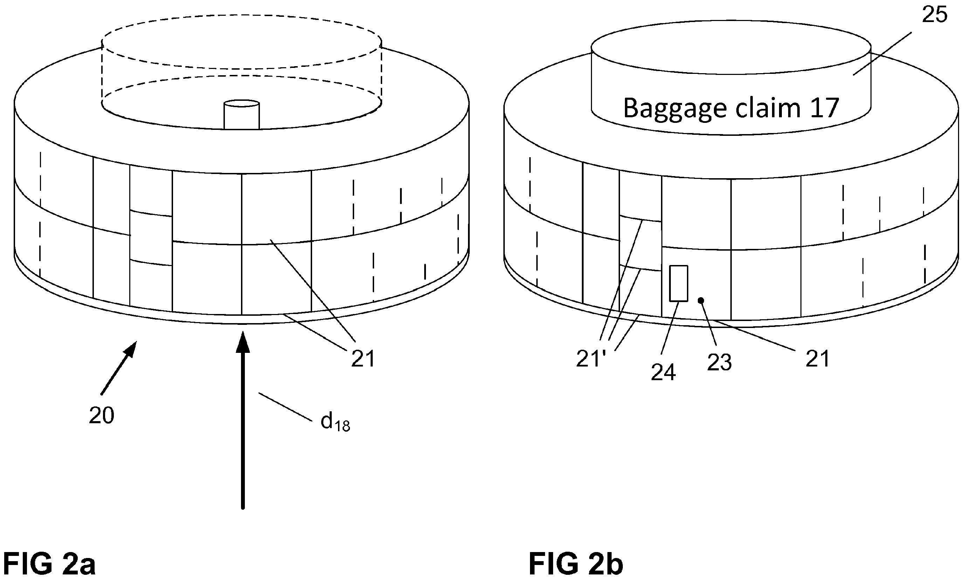

FIG 2a und FIG 2b zeigen je eine perspektivische Ansicht einer zylinderförmigen Ausgabestelle 20. In FIG 2a ist der obere Teil weggelassen, um die Platzverhältnisse innerhalb der zylindrischen Ausgabestelle 20 für das Einbringen der Gepäckstücke in die Ausgabefächer 21 zu zeigen. FIG 2b zeigt das "Dach" der zylinderförmigen Ausgabestelle 20: Es ist eine Großanzeige bzw. Großdisplay 25 angebracht, um die Nummer der Ausgabestelle 20 für die Flugpassagiere anzuzeigen. Anstelle einer Nummer wie in FIG 2b gezeigt, kann auch eine Klartextanzeige erfolgen mit zB:
Reclaim SR 371 FRA.
Dabei bezeichnet SR 371 die Flugnummer und FRAU den Flughafen des Abflugortes. Bei den FIG 2a und FIG 2B sind je verschieden große Ausgabefächer 21, 21' dargestellt. Zur besseren räumlichen Ausnutzung und zur Steigerung der Ergonomie für die Passagiere sind die Ausgabefächer 21 in verschiedenen Größen verfügbar: Große Fächer für voluminöse und schwere Gepäckstücke werden tendenziell unten, kleinere oben angeordnet, siehe dazu die vorstehend genannten beispielhaften Ausgabefachhöhen. Da die ankommenden Gepäckstücke 10 bezüglich ihrer Dimension erfasst und diese in einem Informationssystem gespeichert werden, können die Gepäckstücke 10 in ein Ausgabefach 21 abgelegt werden, dessen Größe in Relation zur Dimension des entsprechenden Gepäckstückes 10 ist.

Anstelle einer zylinderförmigen Ausgabestelle 20 kann auch eine quaderförmige Ausgabestelle 20 vorgesehen werden. Eine Mehrzahl solcher nebeneinandergereihte Ausgabemodule 30 bildet die vorgenannte quaderförmige Ausgabestelle 20. Bei kleineren Ausgabefächern 20 ist es auch möglich, die Ausgabemodule 30 nicht nur nebeneinander, sondern auch übereinander anzuordnen. Sowohl für eine zylinderförmige Ausgabestelle 20 wie auch für eine quaderförmige Ausgabestelle sind die Ausgabemodule 30 bezüglich ihrer Außenmaße vorzugsweise identisch ausgebildet. Lediglich bezüglich der Größe der Ausgabefächer 21, 21' sind unterschiedliche Ausprägungen vorzusehen. Falls die Ausgabemodule 30 übereinander angeordnet werden, sind diese einstöckig, allenfalls höchstens zweistöckig vorzusehen.

Die Beschickung einer zylinderförmigen Ausgabestelle 20 ist wie folgt zu gestalten. Die Zuführung der Gepäckstücke 10 mit dem vertikalen Lift 18 auf den Ladungsträgern 19 verbleibt. Jedoch ist auf der Höhe der quaderförmigen Ausgabestelle 20 ein Roboter vorzusehen, wie dies in automatischen Lagerhäusern wohlbekannter Stand der Technik ist. Werden zwei quaderförmige Ausgabestelle 20 vorgesehen - ähnlich dem «reclaim belt» der längere parallele Abschnitte aufweist - wird die Beschickung der Ausgabefächer aus Performancegründen von je einem Roboter pro quaderförmige Ausgabestelle 20 vorgenommen. Als Richtwert bezüglich der Ausgabe auf «reclaim belts» stehen für ein Gepäckstück 20 etwa 3s bis 8s zur Verfügung. Dieser Wert ist auch ein Richtwert für die Beschickung der Ausgabefächer 21, 21' mit Gepäckstücken 10.

Der Passagier wird über Anzeigen im Ankunftsbereich über jene zu benutzende Ausgabestelle 20 informiert, die seinem ankommenden Flug entspricht. Zur Vermittlung der Information über das zu benutzende Ausgabefach 21, 21' sind alternativ oder kumulativ folgende Verfahren denkbar:
i) Der Passagier wird über eine App oder eine SMS oder ein E-Mail auf seinem Smartphone informiert:
   Flight N° - reclaim place - Box N° - Status.
   Je nach Zeitpunkt ist die Box N° (=Nummer des Ausgabefaches 21) noch nicht definiert oder gemäß Status ist das Gepäck noch nicht im betreffenden Ausgabefach 21. Somit können für "Status" folgende Ausprägungen vorgesehen werden:
   not yet processed - being processed - ready.
   Entsprechend der Ausgabe des Status erhält der Flugpassagier mehrere solcher Meldung, die den jeweiligen Verarbeitungsfortschritt anzeigen. Bei Verwendung des Mediums E-Mail, App oder MMS kann bei "status = ready" zusätzlich ein graphischer Code wie zB ein QR-Code oder ein Strichcode übermittelt werden. Mit diesem Code lässt sich dann mit einem an der betreffenden Außentüre 23 vorhandenen Scanner und dem gekoppelten Schließmechanismus 24 die Außentüre 23 öffnen. Die Kopplung zwischen dem Scanner und dem Schließmechanismus 24 erfolgt vorzugsweise über das IT-Informationssystem, damit dieser Vorgang aufgezeichnet werden kann. Dies ist auch wichtig, wenn ein Passagier behauptet, er habe sein Gepäck 10 nicht erhalten. Ebenso kann dadurch eine unbefugte Entnahme in jenen Fällen verhindert werden, bei denen ein Flugpassagier den Verlust seines physischen Flugscheins oder Gepäckaufgabebelegs noch rechtzeitig melden kann.
   Nur auf diese Weise ist eine abschließende Rückverfolgbarkeit des Transportweges eines Gepäckstückes 10 sichergestellt. Eine direkte mechanische Kopplung ist auch möglich, diese erlaubt jedoch nicht eine weitergehende Überwachung der Entnahme eines Gepäckstückes 10.
ii) Die vorgenannte Information über Anzeigen ist aus praktischen Gründen beschränkt auf die Angabe der Ausgabestelle, da es nicht praktikabel ist, ein Display mit zB 220 Zeilen vorzusehen, wobei die Zahl 220 für die Anzahl Passagiere des ankommenden Fluges steht. Für Passagiere, die kein Smartphone haben, kann die Information über das zu benutzende Ausgabefach 21 wie folgt vermittelt werden:
   Der Passagier kann seinen Flugschein oder seinen Gepäckaufgabebeleg (beide enthalten üblicherweise einen QR-Code oder einen äquivalenten Code) an einem zentralen Terminal scannen, um das Ausgabefach 21, 21' anzuzeigen. Ggf. kann für mnemotechnisch behinderte Personen ein Belegausdruck mit der Nummer des zutreffenden Ausgabefaches erstellt werden.
iii) Die Zuordnung der Gepäckstücke 10 zu den Ausgabefächern 21, 21' ist ein hochdynamischer Prozess, so werden die Gepäckstücke 10 jener Passagiere mit einem höherwertigen Flugschein (Business Class, First Class) priorisiert herausgegeben. Für die ankommenden Passagiere ist somit die Ausgabestelle 20 fest definiert, jedoch sind die entsprechenden Ausgabefächer 21 erst später festgelegt, da Gepäckausgabefächer pro ankommendem Flug auch mehrmals benutzt werden können bzw. werden sollen. Die Information der Passagiere über das Ausgabefach 21 ihrer Gepäckstücke 10 kann auch dadurch erfolgen, dass das Flugticket oder der Gepäckaufgabebeleg von einem Scanner 24 an irgend einer Außentüre 23 eines Ausgabefaches 21, 21' der betreffenden Ausgabestelle 20 gelesen wird und am Display eine Information angezeigt wird:
   Flight N° - Reclaim belt - Box N° - status.
   Die Bedeutung der vorgenannten Information ist analog wie vorstehend unter Ziffer i) beschrieben.

Das Öffnen eines Ausgabefaches kann wahlweise veranlasst werden durch:
i) Scannen des Flugscheins bzw. Transportscheins, des Gepäckaufgabebeleges, eines die Identität des Passagier definierenden amtlichen Dokumentes (Reisepass) oder des Boardingpasses;
ii) Eingabe eines numerischen oder alphanumerischen Codes, der wie vorstehend erläutert alternativ dem Passagier mitgeteilt werden; für die Eingabe kann eine mechanische Tastatur oder eine auf einem Touch Screen dargestellte Tastatur vorgesehen sein;
iii) Automatisches Scannen eines RFID-Codes (zB auf dem Flugschein) oder Anwendung der NFC-Technik eines Smartphones.

Auf einem Flughafen sind mehrere Organisationen tätig, so zB ein Flughafenbetreiber, ein «ground handler», ein IT-Provider und mehrere Fluggesellschaften. Üblicherweise stellt der IT-Provider mit seinen IT-Informationssystemen die Daten für die verschiedenen Organisationen bereit. Dazu gibt es Standards von zB IATA [1] und SITA zB «SITA BagMessage System». Für eine Implementierung der vorliegenden Erfindung sind die Daten wie Flugnummer, Passagierdaten, Gepäckdaten daher ohnehin bereit. Es braucht also zusätzlich eine Echtzeit-Verarbeitung dieser Daten für die Zuordnung der Gepäckstücke 10 zu den Ausgabefächern 21 der entsprechenden Ausgabestelle 20.

### Liste der Bezugszeichen, Glossar

- 10: Objekt, Koffer, Gepäck, Gepäckstück
- 11: Lageerkennung, 3D-Erfassung der Dimension der Objekte
- 12: Ausrichtemodul
- 13: Rotationsförderer
- 14: Roboterarm zur Aufbringung einer Kennzeichnung
- 15: Tablar mit Förderband
- 16: Erste Beschickungslinie
- 17: Zweite Beschickungslinie
- 18: Vertikaler Lift
- 19: Ladungsträger, Teleskopförderer
- 20: Ausgabestelle
- 21, 21': Ausgabefach; Lagerfach
- 22: Innentüre, Innenschiebetüre eines Ausgabefaches
- 23: Außentüre
- 24: Scanner mit gekoppeltem Schließmechanismus
- 25: Großanzeige
- 26: Handgriff
- 27: Display an Außentüre
- 28: Liftsäule
- 30: Ausgabefachmodul
- d₁₀: horizontale Förderrichtung der Objekte, Koffer, Gepäckstücke
- d₁₈: Transportrichtung des vertikalen Lifts
- IATA: International Air Transport Association
- ID: Identität
- ID₁₀: Gepäckidentität, Identität eines Gepäckstückes 10
- r₁₉: Drehrichtung eines Ladungsträgers für vertikalen Lift
- r₂₃: Drehrichtung einer Außentüre
- SITA: Societe Internationale de Telecommunication Aeronautique

### Liste der zitierten Dokumente

[1] IATA Passenger Services Conference Resolutions Manual RECOMMENDED PRACTICE 1745 BAGGAGE INFORMATION MESSAGES; 36 edition June 2016; available by purchasing at http://www.iata.org/publications/pages/standards-manuals.aspx

## Patentansprüche

1. System zur gesicherten Ausgabe von Objekten (10) verschiedener Dimensionen aus verschließbaren Ausgabefächern (21, 21'), die in einer Ausgabestelle (20) angeordnet sind, wobei jedem Objekt (10) eine eindeutige maschinenlesbare Identität (ID₁₀) zugeordnet ist und die Objekte (10) auf einem Fördermittel (18) der Ausgabestelle (20) zugeführt werden, **dadurch gekennzeichnet, dass**
- das System Mittel zur Erfassung (11) der Dimension der zugeführten Objekte (10) aufweist und diese erfasste Dimension zusammen mit der Identität (ID₁₀) der Objekte in einem Informationssystem gespeichert wird;
- das System ein Ausrichtemodul (12) zur Ausrichtung der Objekte (10) und einen Rotationsförderer (13) zur Aufrichtung der Objekte (10) aufweist;
- das System Mittel (18, 19) zur Verteilung und Platzierung der aus- und aufgerichteten Objekte (10) in Ausgabefächer (21, 21') verschiedener Größe aufweist, wobei die Verteilung eines jeden Objektes (10) in ein Ausgabefach (21, 21') abhängig von der erfassten Dimension dieses Objektes (10) ist, und
- zum Ausgabefach (21, 21') ein Verschlussmittel (23, 24) vorgesehen ist, damit das Ausgabefach (21, 21') mit einer aus der Identität (ID₁₀) des Objektes (10) abgeleiteten Identität geöffnet werden kann.

2. System nach Anspruch 1,
**dadurch gekennzeichnet, dass**
für die Verteilung der Objekte (10) in die Ausgabestelle (20) ein vertikaler Lift (18) mit Ladungsträgern (19) vorgesehen ist, wobei die Ladungsträger (19) an einer Liftsäule (28) des Liftes (18) befestigt sind und vorgängig auf die Ladungsträger (19) je ein aus- und aufgerichtetes Objekt (10) geladen wurde.

3. System nach Anspruch 2,
**dadurch gekennzeichnet, dass**
die Ausgabestelle (20) zylinderförmig ausgebildet ist und der Lift (18) durch horizontales Rotieren (r₁₉) des Ladungsträgers (19) um die Liftachse (28) ein Ausgabefach (21, 21') vom Inneren des Zylinders zur Übergabe des betreffenden Objektes (10) ansteuert und das betreffende Objekt (10) in ein Ausgabefach (21, 21') abhängig von der erfassten Dimension dieses Objektes (10) platziert.

4. System nach Anspruch 2,
**dadurch gekennzeichnet, dass**
die Ausgabestelle (20) quaderförmig ausgebildet ist und der Lift (18) das auf einem Ladungsträger (19) befindliche Objekt (10) an einen Roboter übergibt, der das betreffende Objekt (10) in ein Ausgabefach (21, 21') abhängig von der erfassten Dimension dieses Objektes (10) platziert.

5. System nach einem der Ansprüche 1 bis 4,
**dadurch gekennzeichnet, dass**
jedes Ausgabefach (21, 21') eine Innentüre (22) und eine Außentüre (23) aufweist, wobei als Verschlussmittel auf der Außentüre (23) ein Scanner mit einem gekoppelten Schließmechanismus (24) und ein zugehöriges Display (27) angebracht ist.

6. System nach Anspruch 5,
**dadurch gekennzeichnet, dass**
die Kopplung zwischen Scanner und Schließmechanismus (24) über das Informationssystem erfolgt.

7. System nach Anspruch 5 oder 6,
**dadurch gekennzeichnet, dass**
die Zuordnung eines Objektes (10) zu einem Ausgabefach (21, 21') anzeigbar ist durch mit der vom Scanner (24) an irgendeiner Außentüre (23) erfassten abgeleiteten Identität des Objektes (10), wobei das Ausgabefach (21) am Display (27) dieser irgendeinen Außentüre (23) angezeigt wird.

8. System nach einem der Ansprüche 5 bis 7,
**dadurch gekennzeichnet, dass**
die Innentüre (22) nach erfolgter Platzierung eines Objektes (10) in das zugehörige Ausgabefach (21, 21') verschlossen ist.

9. System nach einem der Ansprüche 1 bis 8,
**dadurch gekennzeichnet, dass**
die jedem Objekt (10) zugeordnete eindeutige maschinenlesbare Identität (ID₁₀) als Strichcode oder als QR-Code oder als RFID-Tag ausgebildet ist.

10. System nach einem der Ansprüche 1 bis 9,
**dadurch gekennzeichnet, dass**
die jedem Objekt (10) zugeordnete eindeutige maschinenlesbare Identität (ID₁₀) mittels NFC-Technologie dem Verschlussmittel (23, 24) zuführbar ist.

11. System nach einem der Ansprüche 1 bis 10,
**dadurch gekennzeichnet, dass**
die Ausgabestelle (20) aus mehreren Ausgabefachmodule (30) gebildet wird, wobei die Ausgabefachmodule (30) bezüglich ihrer Außenmaße identisch sind.

12. System nach Anspruch 11,
**dadurch gekennzeichnet, dass**
das Ausgabefachmodul (30) mehrere Ausgabefächer (21, 21') aufweist, die übereinander angeordnet sind.

13. System nach Anspruch 11 oder 12,
**dadurch gekennzeichnet, dass**
das Ausgabefachmodul (30) mehrere Ausgabefächer (21, 21') aufweist, die nebeneinander angeordnet sind.

14. Verwendung des Systems gemäß den Ansprüchen 1 bis 13 in einem Flughafen zur Ausgabe von Gepäckstücken (10) an Passagiere, wobei die aus der Identität (ID₁₀) des Objektes (10) abgeleitete Identität eine Identität eines Flugscheines oder eines amtlichen Ausweisdokumentes oder eines Gepäckaufgabebelegs ist.
